# EUROPEAN PATENT APPLICATION

(11) **EP 4 063 708 A1**
(43) Date of publication of application: **28.09.2022**
(21) Application number: 21196125.5
(22) Date of filing: 10.09.2021
(51) Int. Cl.: F16M 11/04, F16M 11/20

(54) **ANGLE-ADJUSTABLE MULTIFUNCTIONAL FIXING BASE**

(30) Priority: 24.03.2021 CN 202120596965 U
(71) Applicant: Ningbo Weifeng Intelligent Technology Co., Ltd., Ningbo, Zhejiang (CN)
(72) Inventor: LU, Qi, Ningbo (CN)
(74) Representative: Petculescu, Ana-Maria

(57) **Abstract**

An angle-adjustable multifunctional fixing base comprises a pipe body; an assembling base which is arranged at an upper end of the pipe body and is provided with an assembling plate; a clamp which is provided with a clamp hole thereon, is rotatably arranged on the assembling plate, and is positioned by a rotary knob mechanism, wherein a first fixing position is provided at a side portion of the clamp; and a telescopic rod which passes through the clamp hole, partially extends into the pipe body, and can be clamped by the clamp, wherein a second fixing position is provided at an upper end of the telescopic rod. Two sets of photography equipment can be assembled by providing the first fixing position and the second fixing position on the multifunctional fixing base in the present disclosure, the telescopic rod can be moved to adjust the height, and the height of the second fixing position can be adjusted as required; in addition, after the telescopic rod is pulled out of the pipe body, the rotary knob mechanism is unscrewed, then the clamp can be rotated, and thus the first fixing position and the second fixing position can rotate along with the clamp, and the position can be adjusted flexibly.

## Description

### TECHNICAL FIELD

The present disclosure relates to the field of auxiliary equipment for cameras/mobile phones, and in particular to an angle-adjustable multifunctional fixing base.

### BACKGROUND

With the increasing popularity of smart phones and camera equipment, the photography, photo-taking and live broadcast industries are increasingly developed. In the process of photo-taking, photographing and live broadcasting, support equipment such as a tripod and the like are frequently used to fix a position of a mobile phone/a camera and to keep the stability during photographing.

A tripod, as frequently used fixing equipment, is provided with a fixing base thereon, the fixing base is provided with a mounting position, and the equipment such as a camera, a mobile phone, and the like can be mounted on the mounting position. In general, the fixing equipment is provided with one mounting position for fixing one set of equipment. At present, with the increasing development of live broadcast, photography, and short-form video industries, multiple sets of equipment need to be simultaneously fixed sometimes, and thus multiple mounting positions need to be provided on the fixing base. In addition, the position, the angle, and the like of the mounting position also need to be adjusted as required. These new demands have new requirements to a conventional fixing base structure, and have higher requirements on a clamping structure, a rotating structure, and the like in the conventional fixing base structure at the same time, and the requirement of high positioning strength also needs to be met while the operation is convenient.

Therefore, based on certain existing problems, the present disclosure makes further design and improvement to a fixing base for a camera/a mobile phone.

### SUMMARY

For the disadvantages in the prior art, the present disclosure provides an angle-adjustable multifunctional fixing base which is provided with two mounting positions, adjustable in position and angle, convenient to operate, strong in clamping force of a clamp, and high in stability.

To solve the technical problems, the present disclosure is solved through the following technical solutions.

An angle-adjustable multifunctional fixing base comprises a pipe body; an assembling base which is arranged at an upper end of the pipe body and is provided with an assembling plate; a clamp which is provided with a clamp hole thereon, is rotatably arranged on the assembling plate, and is positioned through a rotary knob mechanism, wherein a first fixing position is provided at a side portion of the clamp; and a telescopic rod which passes through the clamp hole, partially extends into the pipe body, and can be clamped by the clamp, wherein a second fixing position is provided at an upper end of the telescopic rod.

In the multifunctional fixing base in the present disclosure, the pipe body can be assembled on a device such as a traditional tripod, a stabilizer, and the like to form one set of photography auxiliary equipment. Two sets of photography equipment can be assembled by providing the first fixing position and the second fixing position on the multifunctional fixing base in the present disclosure, the telescopic rod can be moved to adjust the height, and the height of the second fixing position can be adjusted as required; in addition, after the telescopic rod is pulled out of the pipe body, the rotary knob mechanism is unscrewed, then the clamp can be rotated, and thus the first fixing position and the second fixing position can rotate along with the clamp, and position can be adjusted flexibly.

In one preferred embodiment, two clamping plates are arranged on the clamp, the assembling plate is placed between the two clamping plates, the rotary knob mechanism passes through the two clamping plates and the assembling plate for an unscrewing/screwing operation, the structure is simple, the assembling is convenient, and the clamping force is strong.

In one preferred embodiment, the rotary knob mechanism is sleeved with a locking piece, and the locking piece is positioned in a first positioning hole on one clamping plate; an end face, towards the assembling plate, of the locking piece is provided with the first teeth; and a face, in contact with the first teeth, of the assembling plate is provided with the second teeth. In the structure, in the process of screwing, the locking piece and the assembling plate are attached to each other, the first teeth and the second teeth are mutually clamped together to achieve an excellent positioning function; the locking force is strong, the sliding is avoided after screwing, and the telescopic rod is also clamped simultaneously during the screwing operation.

In one preferred embodiment, a matched bolt is arranged on the rotary knob mechanism, one end of the bolt is provided with a square structural component, and the square structural component is positioned in a second positioning hole on one clamping plate. In the process of screwing and unscrewing, the bolt cannot rotate due to a positioning effect of the square structural component and the second positioning hole, and the rotary knob mechanism screws or unscrew the bolt in the process of rotating, thereby achieving the effects of screwing and unscrewing.

In one preferred embodiment, a washer is arranged between the rotary knob mechanism and the locking piece to play a role of pressure transmission, and the stability is good.

In one preferred embodiment, a raised line is provided on the outer wall of the pipe body, and a positioning groove matched with the raised line is provided on the assembling base; and after assembling, the positioning groove is clamped on the raised line, and thus the assembling base cannot rotate.

In one preferred embodiment, protruding assembling bolts are arranged on the first fixing position and the second fixing position and used for fixing an external mounting structure or directly fixing a camera, a vidicon, and the like.

In one preferred embodiment, a third fixing position is provided at a lower end of the telescopic rod, and can be used for mounting a third set of photography equipment as required.

In one preferred embodiment, the third fixing position is an internal threaded hole and can be used for assembling by a bolt.

Compared with the prior art, the present disclosure has the following beneficial effects that an angle-adjustable multifunctional fixing base is provided. The angle-adjustable multifunctional fixing base is provided two mounting positions, adjustable in position and angle, convenient to operate, strong in clamping force of a clamp, and high in stability.

### BRIEF DESCRIPTION OF THE DRAWINGS

FIG. 1 is a stereogram of a multifunctional fixing base in accordance with the present disclosure.
FIG. 2 is a first stereogram of a multifunctional fixing base without a pipe body in accordance with the present disclosure.
FIG. 3 is a second stereogram of a multifunctional fixing base without a pipe body in accordance with the present disclosure.
FIG. 4 is a stereogram of an assembling base and a clamp in accordance with the present disclosure.
FIG. 5 is a stereogram of a clamp in accordance with the present disclosure.
FIG. 6 is a stereogram of a rotary knob mechanism and a matching structure in accordance with the present disclosure.
FIG. 7 is a first stereogram of an assembling base in accordance with the present disclosure.
FIG. 8 is a second stereogram of an assembling base in accordance with the present disclosure.
FIG. 9 is a sectional view of an assembling structure of a multifunctional fixing base in accordance with the present disclosure.
FIG. 10 is a diagram of a multifunctional fixing base in a conventional state.
FIG. 11 is a diagram of a multifunctional fixing base in a rotating state.
FIG. 12 is a diagram of a multifunctional fixing base in a rotating state and after movement of a telescopic rod.

### DETAILED DESCRIPTION OF THE EMBODIMENTS

The present disclosure is further described in detail below with reference to the accompanying drawings and the detailed embodiments.

In the following embodiments, the same or similar reference numerals throughout denote the same or similar elements or elements having same or similar functions. The embodiments described below with reference to the accompanying drawings are illustrative and are provided for explaining the present disclosure only, and shall not be construed as limiting the present disclosure.

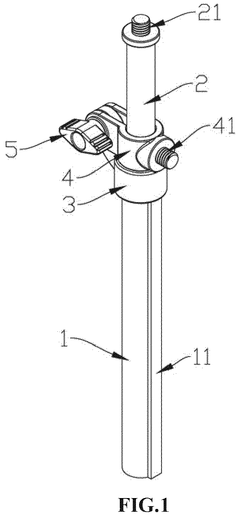

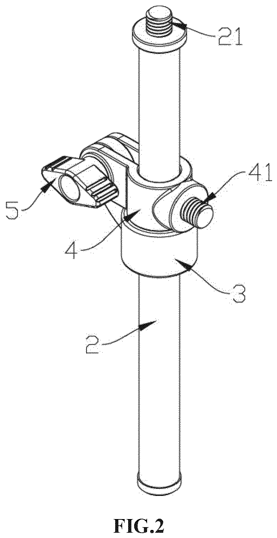

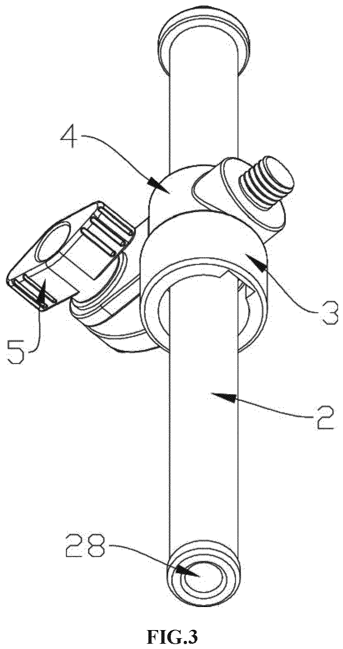

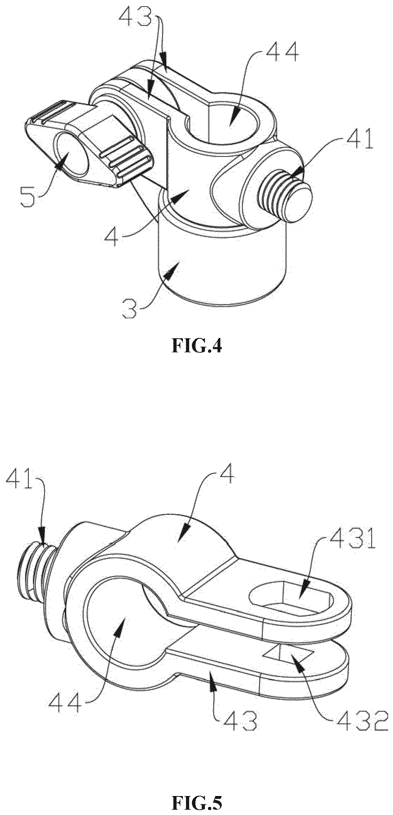

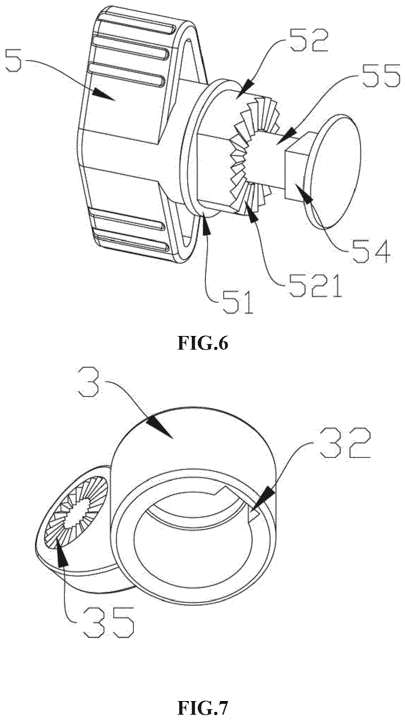

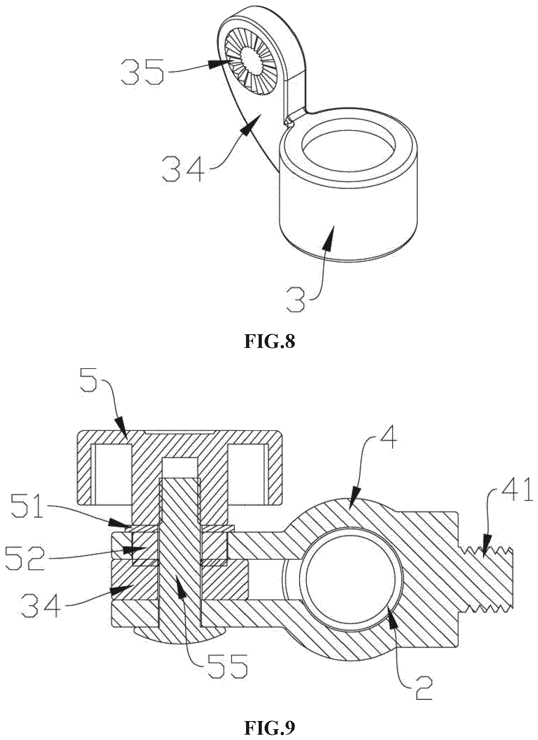

Referring to FIG. 1 to FIG. 9, the present disclosure relates to an angle-adjustable multifunctional fixing base, which comprises a pipe body 1; an assembling base 3 which is arranged at an upper end of the pipe body 1 and is provided with an assembling plate 34; a clamp 4 which is provided with a clamp hole 44 thereon, is rotatably arranged on the assembling plate 34, and is positioned by a rotary knob mechanism 5, wherein a first fixing position 41 is provided at a side portion of the clamp 4; and a telescopic rod 2 which passes through the clamp hole 44, partially extends into the pipe body 1, and can be clamped by the clamp 4, wherein a second fixing position 21 is provided at an upper end of the telescopic rod 2. Protruding assembling bolts are arranged on the first fixing position 41 and the second fixing position 21, and are used for fixing an external mounting structure or directly fixing a camera, a vidicon, and the like.

Specifically, in the present disclosure, two clamping plates 43 are arranged on the clamp 4, the assembling plate 34 is placed between the two clamping plates 43, and the rotary knob mechanism 5 passes through the two clamping plates 43 and the assembling plate 34 for an unscrewing/screwing operation; the structure is simple, the assembling is convenient, the clamping force is strong, and the telescopic rod 2 is also clamped simultaneously during the screwing operation.

In the present disclosure, the rotary knob mechanism 5 is sleeved with a locking piece 52, the locking piece 52 is positioned in a first positioning hole 431 on one clamping plate 43; an end face, towards the assembling plate 34, of the locking piece 52 is provided with the first teeth 521, and a face, in contact with the first teeth 521, of the assembling plate 34 is provided with the second teeth 35. In the structure, in the process of screwing, the locking piece 52 and the assembling plate 34 are attached to each other, the first teeth 521 and the second teeth 35 are mutually clamped together to achieve an excellent positioning function, the locking force is strong, and the sliding is avoided after screwing. A matched bolt 55 is arranged on the rotary knob mechanism 5, one end of the bolt 55 is provided with a square structural component 54, and the square structural component 54 is positioned in a second positioning hole 432 on one clamping plate 43. In the process of screwing and unscrewing, the bolt 55 cannot rotate due to a positioning effect of the square structural component 54 and the second positioning hole 432, and the rotary knob mechanism 5 screws or unscrews the bolt 55 in the process of rotating, thereby achieving the effects of screwing and unscrewing. In addition, a washer 51 is arranged between the rotary knob mechanism 5 and the locking piece 52 to play a role of pressure transmission, and the stability is good.

In the present disclosure, a raised line 11 is provided on the outer wall of the pipe body 1, and a positioning groove 32 matched with the raised line 11 is provided on the assembling base 3; and after assembling, the positioning groove 32 is clamped on the raised line 11, and thus the assembling base 3 cannot rotate.

In the multifunctional fixing base in the present disclosure, the pipe body 1 can be assembled on a device such as a traditional tripod, a stabilizer, and the like to form one set of photography auxiliary equipment. Two sets of photography equipment can be assembled by providing the first fixing position 41 and the second fixing position 21 on the multifunctional fixing base in the present disclosure, the telescopic rod 2 can be moved to adjust the height, and the height of the second fixing position 21 can be adjusted as required; in addition, after the telescopic rod 2 is pulled out of the pipe body 1, the rotary knob mechanism 5 is unscrewed, then the clamp 4 can be rotated, and thus the first fixing position 41 and the second fixing position 21 can rotate along with the clamp 4, and the position can be adjusted flexibly. In addition, in the present disclosure, a third fixing position 28, preferably an internal threaded hole, is provided at a lower end of the telescopic rod 2, the third fixing hole 28 can be used for assembling by a bolt, and can be used for mounting a third set of photography equipment as required.

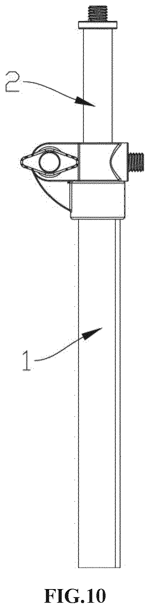

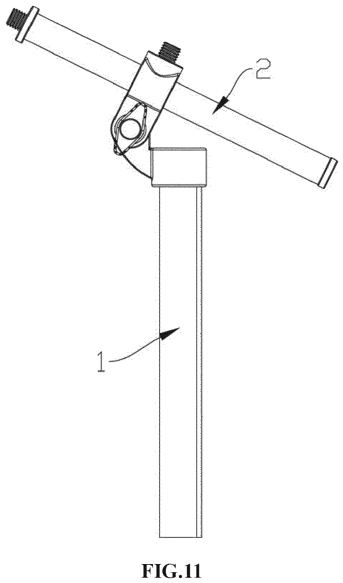

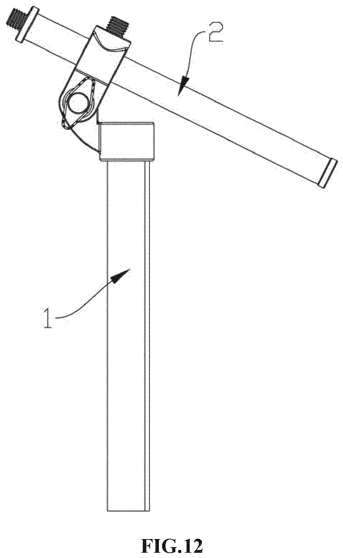

As shown in FIG. 10 to FIG. 12, FIG. 10 is a diagram of a multifunctional fixing base in a conventional state; at the moment, the first fixing position 41 is located on a side face, and the second fixing position 21 is located at the upper end, and external photography equipment can be assembled, and at the moment, the telescopic rod 2 can be moved up and down to adjust the height. As shown in FIG. 11 and FIG. 12, the first fixing position 41 and the second fixing hole 21 extend obliquely, other required angles for positioning can also be selected by rotating the clamp 4, and the telescopic rod 2 can also be moved as required.

As above, the present disclosure provides an angle-adjustable multifunctional fixing base which is provided with two mounting positions, adjustable in position and angle, convenient to operate, strong in clamping force of a clamp, and high in stability.

The scope of protection of the present disclosure includes, but is not limited to, the above embodiments, and the scope of protection of the present disclosure is subject to the claims, and any replacements, modifications, and improvements that are easily conceived by those skilled in the art to the present technology fall within the scope of the present disclosure.

## Claims

1. An angle-adjustable multifunctional fixing base, comprising:
a pipe body (1);
an assembling base (3) which is arranged at an upper end of the pipe body (1) and is provided with an assembling plate (34);
a clamp (4) which is provided with a clamp hole (44) thereon, is rotatably arranged on the assembling plate (34), and is positioned by a rotary knob mechanism (5), wherein a first fixing position (41) is provided at a side portion of the clamp (4);
and a telescopic rod (2) which passes through the clamp hole (44), partially extends into the pipe body (1), and can be clamped by the clamp (4), wherein a second fixing position (21) is provided at an upper end of the telescopic rod (2).

2. The angle-adjustable multifunctional fixing base according to claim 1, wherein two clamping plates (43) are arranged on the clamp (4), the assembling plate (34) is placed between the two clamping plates (43), and the rotary knob mechanism (5) passes through the two clamping plates (43) and the assembling plate (34) for an unscrewing/screwing operation.

3. The angle-adjustable multifunctional fixing base according to claim 2, wherein the rotary knob mechanism (5) is sleeved with a locking piece (52), and the locking piece (52) is positioned in a first positioning hole (431) on one clamping plate (43); an end face, towards the assembling plate (34), of the locking piece (52) is provided with the first teeth (521), and a face, in contact with the first teeth (521), of the assembling plate (34) is provided with the second teeth (35).

4. The angle-adjustable multifunctional fixing base according to claim 3, wherein a matched bolt (55) is arranged on the rotary knob mechanism (5), one end of the bolt (55) is provided with a square structural component (54), and the square structural component (54) is positioned in a second positioning hole (432) on one clamping plate (43).

5. The angle-adjustable multifunctional fixing base according to claim 3, wherein a washer (51) is arranged between the rotary knob mechanism (5) and the locking piece (52).

6. The angle-adjustable multifunctional fixing base according to claim 3, wherein a raised line (11) is provided on an outer wall of the pipe body (1), and a positioning groove (32) matched with the raised line (11) is provided on the assembling base (3).

7. The angle-adjustable multifunctional fixing base according to any one of claims 1 to 6, wherein protruding assembling bolts are arranged on the first fixing position (41) and the second fixing position (21).

8. The angle-adjustable multifunctional fixing base according to any one of claims 1 to 6, wherein a third fixing position (28) is arranged at a lower end of the telescopic rod (2).

9. The angle-adjustable multifunctional fixing base according to claim 8, wherein the third fixing hole (28) is an internal threaded hole.
